Europäisches Patentamt

(19) European Patent Office

Office européen des brevets

(11) Numéro de publication : **0 112 224**
**B1**

(12) **FASCICULE DE BREVET EUROPÉEN**

(45) Date de publication du fascicule du brevet :
30.12.86

(21) Numéro de dépôt : **83402297.2**

(22) Date de dépôt : **29.11.83**

(51) Int. Cl.⁴ : **B 23 K 26/02**, C 03 B 37/14,
C 03 B 37/025

(54) **Dispositif d'échauffement d'une zone annulaire superficielle d'un objet filiforme.**

(30) Priorité : **10.12.82 FR 8220768**

(43) Date de publication de la demande :
**27.06.84 Bulletin 84/26**

(45) Mention de la délivrance du brevet :
**30.12.86 Bulletin 86/52**

(84) Etats contractants désignés :
**DE GB IT NL SE**

(56) Documents cités :
**DE-A- 2 432 538**
**FR-A- 2 267 987**
**FR-A- 2 323 646**
**US-A- 4 058 699**

(73) Titulaire : **THOMSON-CSF**
**173, Boulevard Haussmann**
**F-75379 Paris Cedex 08 (FR)**

(72) Inventeur : **Graindorge, Philippe**
**THOMSON-CSF SCPI 173, bld Haussmann**
**F-75379 Paris Cedex 08 (FR)**
Inventeur : **Arditty, Hervé**
**THOMSON-CSF SCPI 173, bld Haussmann**
**F-75379 Paris Cedex 08 (FR)**

(74) Mandataire : **Weinmiller, Jürgen et al**
**Lennéstrasse 9**
**D-8133 Feldafing (DE)**

## Description

L'invention concerne un dispositif permettant l'échauffement d'une zone annulaire superficielle d'un objet filiforme.

Le domaine de l'invention est, en particulier, celui de l'épissurage de fibres optiques, qui permet le raccordement de fibres optiques.

L'épissurage entre deux fibres optiques consiste à effectuer une soudure entre les deux extrémités de ces fibres, correctement coupées, alignées et positionnées face à face, par exemple dans un Vé de guidage. En chauffant pendant quelques fractions de seconde à une température de 2 000 °C, la fusion et la soudure des extrémités sont réalisées. La source de chaleur peut être de trois types : un arc électrique établi entre deux électrodes éventuellement contrôlé par un plasma gazeux un microchalumeau oxhydrique ou un laser à dioxyde de carbone ($CO_2$).

On connaît par le document FR-A-23 23 646 un dispositif d'échauffement d'une zone annulaire superficielle d'une fibre de verre à l'aide d'un faisceau laser. L'axe de défilement de la fibre est perpendiculaire à l'axe d'émission du faisceau. Ce dernier est d'abord réfléchi sur un miroir plan pour coïncider sous forme d'un faisceau parallèle avec l'axe de défilement, et puis il est focalisé sur le point d'échauffement de la fibre par un miroir focalisateur. Le miroir plan et le miroir focalisateur sont chacun percés d'un trou permettant le défilement de la fibre. Pour des raisons mécaniques de défilement de la fibre, les dimensions de ces trous ne peuvent pas être très faibles, ce qui entraîne une perte non négligeable en énergie du faisceau. L'invention a pour but de proposer un dispositif d'échauffement d'une fibre de verre dans lequel les pertes d'énergie à travers les trous de passage des miroirs sont réduites. Ce but est atteint par le dispositif tel qu'il est défini dans la revendication 1. En ce qui concerne des exemples préférés de mise en œuvre de l'invention, référence est faite aux sous-revendications.

L'invention sera décrite ci-après plus en détail en référence aux figures annexées où :

la figure 1 illustre le dispositif selon l'invention ;

la figure 2 illustre deux aspects particuliers du dispositif selon l'invention ;

la figure 3 illustre une variante du dispositif de l'invention ;

la figure 4 illustre un dispositif de fibrage utilisant le dispositif de l'invention.

Dans le dispositif de l'invention, on utilise un laser dont le faisceau est dirigé sur un miroir parabolique (ou sphérique) puis réfléchi sur un miroir ellipsoïdal, permettant de concentrer l'énergie sur un anneau situé à la périphérie de l'objet filiforme.

Dans la suite de la description cet objet filiforme sera pris à titre d'exemple comme étant une fibre optique.

Dans la suite de la description on utilise un laser de type à dioxyde de carbone ($CO_2$), dont la longueur d'onde des rayonnements est de 10,6 micromètres. En effet un tel laser présente des avantages suivants : la possibilité de fusion de la fibre en silice sans dépôt d'impuretés dans la zone de fusion et la possibilité d'un contrôle précis de la focalisation du faisceau à l'endroit de la zone à échauffer et celui de la densité d'énergie émise par ce laser.

En effet pour cette longueur d'onde de 10,6 micromètres la fibre n'est plus transparente, elle est opaque et la chaleur qui est celle obtenue pour la pellicule extérieure de la fibre se propage alors à l'intérieur de celle-ci ce qui permet de ne pas avoir à utiliser de fortes puissances émises.

Ce dispositif permet donc une fusion de la fibre avec des puissances laser très faibles par exemple inférieures à 10 Watts, et d'avoir une bonne symétrie de révolution de la zone échauffée.

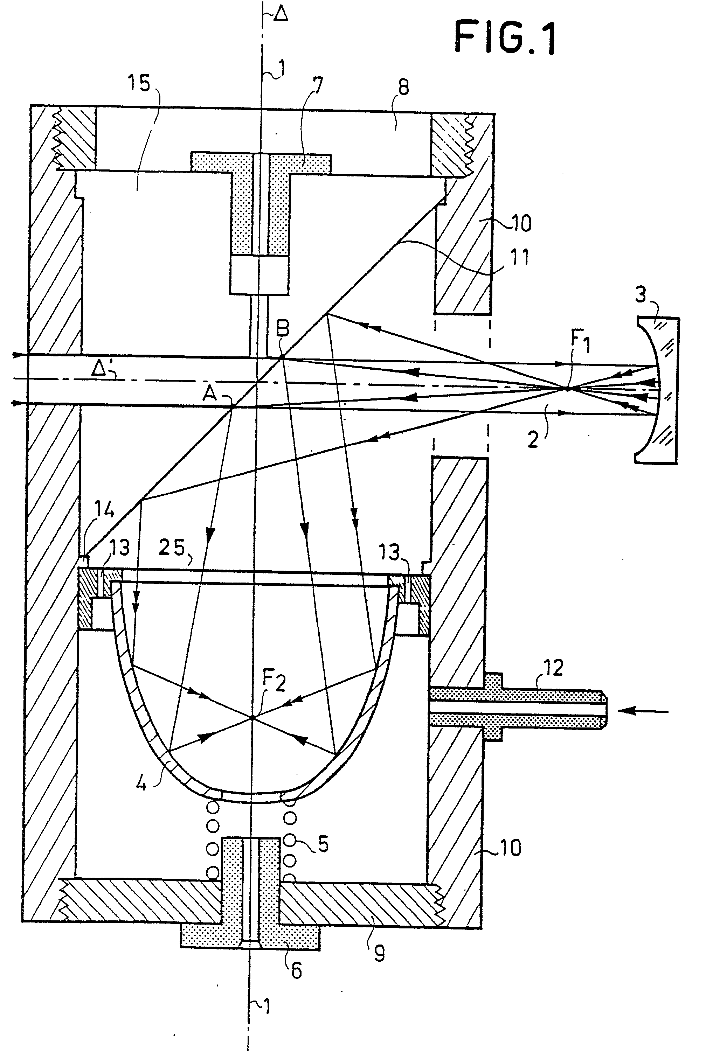

Le dispositif de l'invention comprend un corps creux 10 comportant une enceinte intérieure dans lequel on fixe à l'une de ses extrémités un objet de forme cylindrique 15. Sur la figure 1 cet objet 15 est coincé à titre d'exemple par un anneau 8 qui se visse dans le corps creux 10, de forme tubulaire par exemple.

Cet anneau 8 est une bague qui permet de coincer l'objet de forme cylindrique 15, qui est lui même bloqué sur un petit épaulement 14 situé sur la paroi interne du corps de forme tubulaire 10.

L'objet de forme cylindrique 15 comporte une portée inclinée 11 qui est une surface réfléchissante. Cet objet 15 est percé suivant son axe de symétrie d'un canal dans lequel peut défiler une fibre optique 1. Un orifice 7 dont les parois sont en polytétrafluoréthylène permet d'éviter d'abîmer cette fibre en cas de frottement.

En effet le polytétrafluoréthylène a un coefficient de frottement extrêmement faible ; il est par exemple de 0,04 sur un acier poli, et il est autolubrifiant et antiadhérent. Par comparaison, employés dans les mêmes conditions, le caoutchouc ou le néoprène ont des coefficients de frottement d'environ 0,8.

De l'autre côté de ce tube, est fixé par exemple par vissage un élément cylindrique qui comporte en son centre de symétrie un second orifice 6 ayant des parois en tétrafluoréthylène dans lequel défile aussi la fibre. Cet élément soutient un ressort 5 qui lui-même soutient un miroir elliptique qui est percé en son centre pour laisser passer la fibre optique et qui est relié aux parois internes du corps creux 10 par des éléments qui comportent des trous 13 permettant au gaz introduit par l'orifice 12 de ventilation de s'écouler.

Ces différentes pièces comportent un axe de symétrie Δ, telles que le corps de forme tubulaire, le corps de forme cylindrique et le miroir ellipsoïdal sont très bien centrées les unes par rapport aux autres, et par rapport à l'axe de défilement Δ de la fibre 1.

Le dispositif de l'invention est solidaire d'une équerre parallèle à la tour de fibrage, ce qui permet de bien régler la position relative du dispositif par rapport à la fibre 1 qui est étirée.

Le miroir ellipsoïdal est relié à l'intérieur du corps de forme tubulaire par l'intermédiaire, par exemple, d'un élément 25 ayant la forme d'une couronne et qui est percé d'orifices 13 permettant l'écoulement du gaz injecté par l'orifice 12. Par l'orifice 12 est assurée la ventilation qui consiste à introduire un gaz neutre qui circule sous le miroir ellipsoïdal pour ressortir par les orifices 13 qui sont répartis par exemple tout autour du miroir ellipsoïdal 4, ce qui permet de refroidir le miroir, et d'éviter de polluer la fibre et d'uniformiser la circulation du gaz pour éviter de faire bouger la fibre. Sur le côté du tube et dans la partie correspondante de l'élément cylindrique est percé un alésage permettant le passage d'un faisceau laser 2.

L'axe de cet alésage est perpendiculaire à l'axe de défilement de la fibre 1, et situé dans un plan perpendiculaire au plan de la surface réfléchissante 11. La réflexion peut être assurée par exemple, par une couche d'or déposée sur cette surface réfléchissante 11 réalisée en cuivre par exemple ; le cuivre servant à améliorer la dissipation thermique en cas d'utilisation à forte puissance.

Le miroir 3 disposé dans un plan perpendiculaire à la direction du faisceau laser peut être un miroir sphérique ou parabolique, il focalise le faisceau lumineux 2 issu d'un laser, en un point $F_1$. Après focalisation en $F_1$, les rayons lumineux sont réfléchis par la surface réfléchissante 11 pour atteindre le miroir elliptique 4, et être réfléchis par celui-ci.

Les points $F_1$ et $F_2$ sont les deux foyers conjugués du miroir elliptique 4. Aussi les rayons issus de $F_1$ convergent donc en $F_2$ qui est situé au niveau de la fibre 1.

La zone échauffée située en $F_2$ a la forme d'une couronne. Du fait des aberrations du miroir 3, elle peut avoir par exemple 1 millimètre de hauteur. La température obtenue en cette zone peut être de l'ordre de 1 600 °C qui est la température de ramollissement de la silice.

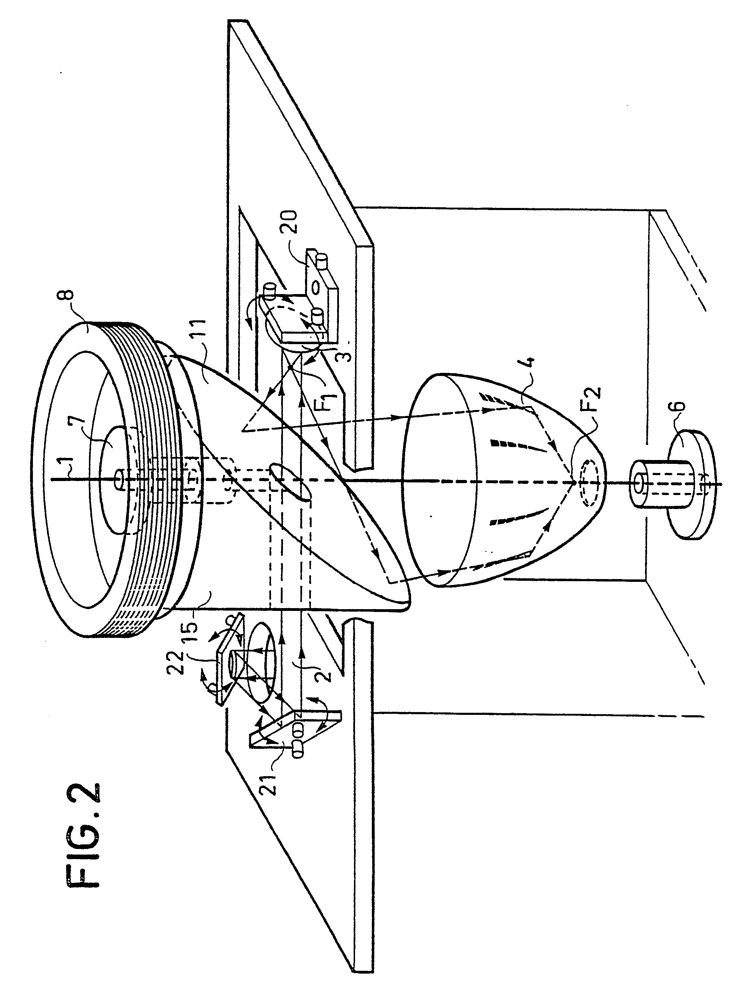

Comme représenté à la figure 2 le miroir d'alignement 3 est monté sur un dispositif de réglage 20 lui donnant deux degrés de réglage angulaire et un degré de réglage longitudinal, ce qui permet de jouer sur la position du point de focalisation des rayons réfléchis afin de le placer au foyer $F_1$.

Les dispositifs de réglage 21, 22 permettent de régler l'incidence du faisceau laser 2 dans le dispositif de l'invention.

La fibre 1 ne doit pas, une fois le réglage effectué, toucher les parois des orifices 6 et 7.

Le miroir d'alignement 3 peut être un miroir sphérique, mais un tel miroir comporte des aberrations. Ainsi pour un faisceau de 10 millimètres de diamètre et pour un miroir de 40 millimètres de courbure on obtient une tache de 1 millimètre en $F_2$ qui est due à ces aberrations ; mais dans le dispositif de l'invention cela n'est pas gênant.

Pour éliminer ce phénomène et obtenir une focalisation vraiment ponctuelle en $F_2$ on peut utiliser un miroir d'alignement 3 paraboloïdal.

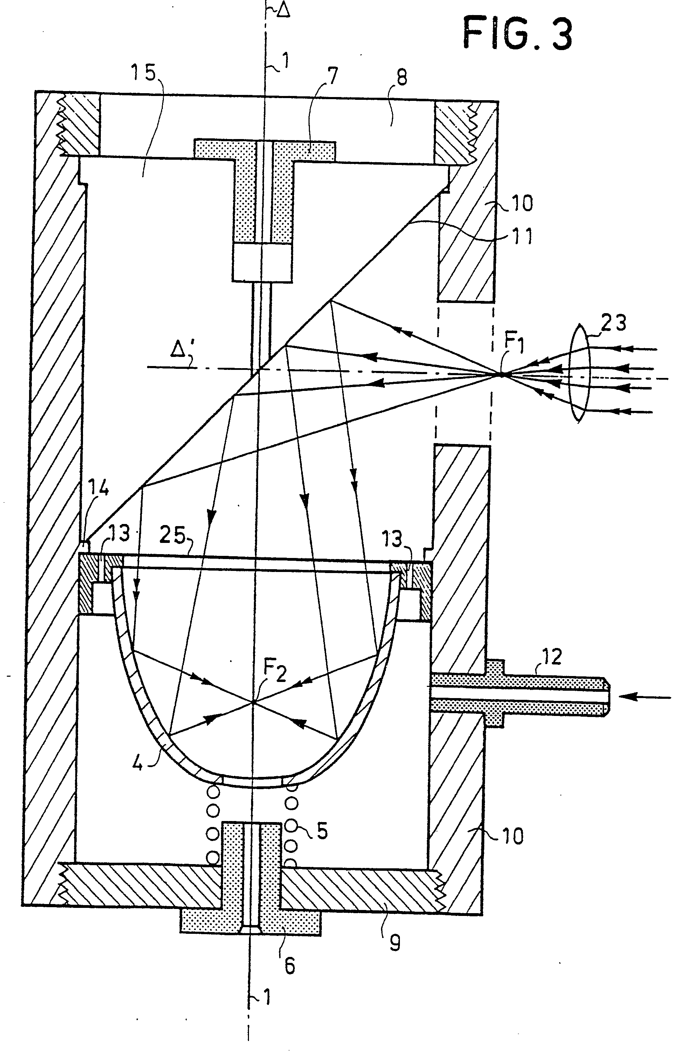

Dans l'exemple de montage illustré aux figures 1 et 2 la surface réfléchissante fait un angle de 45° par rapport à l'axe de défilement de la fibre mais ceci n'est pas nécessaire du moment que le faisceau lumineux est collimaté au premier foyer $F_1$ du miroir ellipsoïdal. On pourrait remplacer le miroir d'alignement 3 par une lentille 23 servant elle aussi pour l'alignement, en plaçant alors la source laser de l'autre côté de cette lentille, comme représenté à la figure 3. Mais la lentille occasionne alors des pertes de puissance de l'ordre de 30 % à 40 % de la puissance incidente.

De plus le montage, illustré à la figure 1, permet d'effectuer les réglages de positionnement en utilisant un laser produisant un rayonnement dans le domaine du visible, car la surface 11 est réfléchissante quelle que soit la longueur d'onde du rayonnement incident ; alors qu'une lentille au germanium, par exemple, est opaque aux rayons visibles, et qu'une lentille en séléniure de zinc (ZnSe) entraîne des modifications de l'indice en fonction de la longueur d'onde utilisée.

L'avantage de l'utilisation d'un rayon laser pour échauffer l'objet filiforme est qu'aucun élément autre que l'objet n'est échauffé, ce qui permet d'éviter une pollution de cet objet qui existe notamment avec une résistance graphite du fait des projections de graphite.

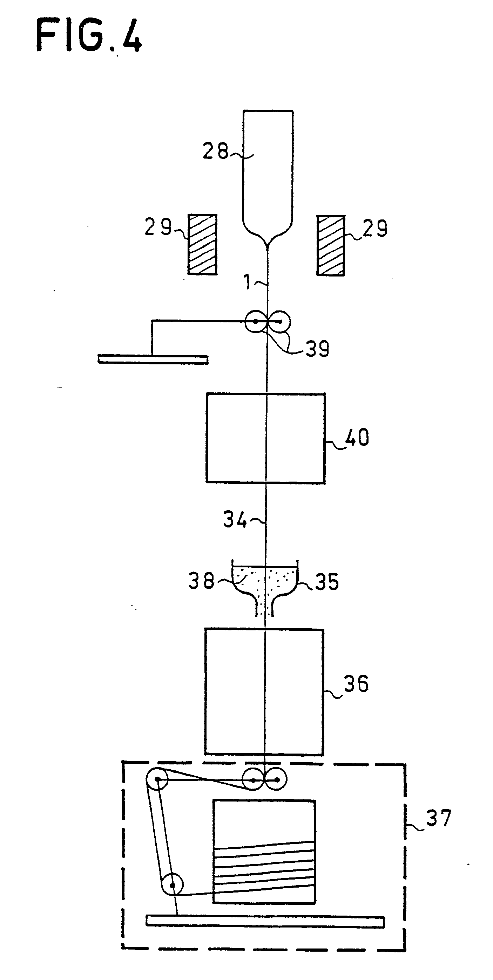

Ce dispositif peut être utilisé dans différents appareils et notamment dans celui décrit à la figure 4.

Cette figure illustre les différents éléments d'une machine de fibrage mettant en œuvre un procédé permettant de conserver la polarisation circulaire dans une fibre optique.

Ce procédé consiste à soumettre la fibre à des contraintes de torsion pendant son étirage et à refondre une partie du volume de la fibre située à la périphérie de celle-ci.

Ceci a pour conséquence de relâcher les contraintes sur la périphérie alors qu'elles sont maintenues sur le cœur de la fibre. Lorsque les contraintes de torsion extérieures appliquées à la fibre sont relâchées, le champ des contraintes se répartit de façon à ce que les contraintes supportées par la périphérie soient très faibles. Le bilan des contraintes dans la fibre doit être nul. Cette refusion de la fibre en superficie est effectuée sur une fibre sans protection, maintenue en torsion.

Le résultat est tel que la zone centrale est soumise à des contraintes de torsion pratiquement égales à celles appliquées pendant l'étirage, alors que les contraintes supportées par la partie refondue sont négligeables. En effet, l'intégrale des moments des contraintes sur chacune des zones sont dans le rapport des surfaces des zones, donc très faibles près de la périphérie et très fortes près du cœur. Ce procédé de refusion permet d'avoir simultanément des contraintes élevées au niveau du cœur de la fibre et des contraintes très faibles à la périphérie de cette fibre ainsi qu'une absence de torsion résiduelle.

Ce procédé consiste donc à contraindre la fibre en torsion et à la refondre superficiellement alors qu'elle est sous contrainte. En volume par exemple 3/4 ou 9/10$^e$ de la fibre sont touchés par la refusion, le cœur n'étant pas touché par celle-ci ; c'est-à-dire une partie centrale d'environ 10 à 20 micromètres n'est pas touchée. Le matériau après refusion reste en place.

Le dispositif représenté à la figure 4 est donc le dispositif de mise en œuvre de ce procédé.

Les différents éléments de ce dispositif sont les suivants. Une préforme 28 qui est positionnée à l'intérieur des moyens de fusion 29, qui peuvent être un chalumeau, un four à effet à Joule, un four à induction hautes, moyennes ou basses fréquences, est à l'origine de la fibre 1. Ces moyens de fusion 29 ramollissent la préforme 28. La matière commence à couler et l'on obtient par étirage et torsion une fibre 1.

Le premier élément après le four d'étirage est tel que la torsion appliquée à la fibre n'est pas absorbée par le cône d'étirage. Il s'agit de poulies 39 induites de matériau anti-dérapant (caoutchouc, silicone) dans laquelle la fibre ne peut pas glisser. Le portique 37 fournissant une contrainte de torsion à la fibre est un tambour d'enroulement. Ce tambour imprime à la fibre un nombre de tours de torsion proportionnel à la vitesse d'étirage, un dispositif de fibrage permettant d'étirer et de torsader la fibre pendant sa fabrication.

On peut alors réaliser une enduction à partir de l'enducteur 35 d'un matériau 38 de protection qui peut être du plastique ou du métal.

Le four de refusion 40 peut être conçu de différentes façons : ce peut notamment être le dispositif de l'invention.

La profondeur de la refusion peut être contrôlée en mesurant le couple appliqué par la fibre sur les poulies de serrage 39.

**Revendications**

1. Dispositif d'échauffement d'une zone annulaire superficielle d'un objet filiforme de forme cylindrique, comprenant un laser à dioxyde de carbone délivrant un faisceau parallèle, et comprenant un corps creux (10) ayant un axe de symétrie (Δ) et comportant une enceinte intérieure, des moyens de défilement de cet objet filiforme (1) suivant un axe de défilement confondu avec cet axe de symétrie (Δ), un objet (15) de forme cylindrique, d'axe de symétrie confondu avec cet axe de défilement, percé d'un alésage suivant cet axe pour permettre le défilement de l'objet filiforme et comportant une portée inclinée (11) qui est une surface réfléchissante pour le faisceau issu du laser, disposé à une première extrémité de ce corps (10) creux et fixé aux parois internes de ce corps, un miroir ellipsoïdal (4), d'axe de symétrie confondu avec l'axe de défilement (Δ), percé suivant cet axe pour permettre le défilement de l'objet filiforme, disposé à une extrémité de ce corps creux (10) et fixé aux parois internes de ce corps (10), et comportant un premier et second foyers conjugués (F1, F2) dont le second (F2) est situé sur l'axe de défilement (Δ), des moyens de focalisation du faisceau issu du laser au premier foyer (F1) du miroir ellipsoïdal (4), le faisceau parallèle (2) issu de ce laser ayant une direction (Δ') perpendiculaire à l'axe de défilement (Δ) de l'objet filiforme et comprise dans un plan perpendiculaire à cette portée inclinée (11), de manière à ce que ce faisceau, après focalisation par les moyens de focalisation et après réflexion sur cette portée inclinée (11) et sur les parois de ce miroir ellipsoïdal, soit focalisé au deuxième foyer (F2) de ce miroir situé sur l'axe de défilement de cet objet filiforme.

2. Dispositif selon la revendication 1, caractérisé en ce que les moyens de focalisation comportent un miroir (3) sphérique, en ce que le corps (10) creux et l'objet (15) de forme cylindrique comportent deux alésages cylindriques dont les axes (Δ') sont confondus et sont perpendiculaires à l'axe de défilement (Δ), et compris dans un plan perpendiculaire à la portée inclinée (11) de cet objet de forme cylindrique, et en ce que ce miroir (3) a son axe de symétrie confondu avec l'axe de symétrie (Δ') de ces alésages et est disposé de l'autre côté du corps de forme tubulaire (10) par rapport au laser.

3. Dispositif selon la revendication 1, caractérisé en ce que les moyens de focalisation comportent un miroir (3) parabolique, en ce que le corps (10) creux et l'objet (15) de forme cylindrique comportent deux alésages cylindriques dont les axes (Δ') sont confondus, et sont perpendiculaires à l'axe de défilement (Δ), et compris dans un plan perpendiculaire à la portée inclinée (11) de cet objet (15) de forme cylindrique, et en ce que ce miroir (3) a son axe de symétrie confondu avec l'axe de symétrie (Δ') de ces alésages, et est disposé de l'autre côté du corps de forme tubulaire (10) par rapport au laser.

4. Dispositif selon la revendication 1, caractérisé en ce que les moyens de focalisation comportent une lentille (23) dont l'axe de symétrie est perpendiculaire à l'axe de défilement (Δ) de l'objet filiforme et compris dans un plan perpendiculaire à la portée inclinée (11), et en ce que cette lentille (23) est située entre le laser et le corps creux (10).

5. Dispositif selon la revendication 1, caractérisé en ce que ce corps creux (10) est un corps de forme tubulaire.

6. Dispositif selon la revendication 1, caractérisé en ce que les moyens de défilement comportent deux éléments (8, 9) disposés aux deux extrémités du corps (10) de forme tubulaire ayant chacun un orifice (7, 6) situé au niveau de l'axe de symétrie (Δ) de ce corps (10) et qui laisse défiler l'objet filiforme (1).

7. Dispositif selon la revendication 6, caractérisé en ce que ces orifices (6, 7) ont des parois en tétrafluoréthylène.

8. Dispositif selon la revendication 6, caractérisé en ce que le miroir ellipsoïdal (4) repose sur un ressort (5) fixé sur l'un de ces éléments (9).

9. Dispositif selon la revendication 8, caractérisé en ce que le miroir ellipsoïdal (4) est fixé aux parois internes du corps de forme tubulaire par l'intermédiaire d'une couronne (25) percée de trous de ventilation (13).

10. Dispositif selon la revendication 9, caractérisé en ce que le corps de forme tubulaire comporte un orifice de ventilation (12) situé entre cette couronne (25) percée de trous et l'élément (9) qui supporte le ressort (5), cet orifice recevant un gaz neutre insufflé en provenance de l'extérieur du corps creux (10).

11. Application du dispositif selon l'une quelconque des revendications 1 à 10, au chauffage d'une fibre optique.

## Claims

1. A device for heating an annular surface zone of a threadlike object of cylindrical shape, comprising a carbon dioxide laser delivering a parallel beam, and comprising a hollow body (10) having an axis of symmetry ($\Delta$) and comprising an inner enclosure, means for causing said threadlike object (1) to move along a travel axis coinciding with said axis of symmetry ($\Delta$), an object (15) of cylindrical shape with an axis of symmetry coinciding with said move axis, having a bore therethrough along said axis for allowing the threadlike object to move, and comprising a slanting bearing surface (11) which is a reflecting surface for the laser beam, disposed at a first end of said hollow body (10) and fixed to the inner walls of this body, an ellipsoidal mirror (4) with an axis of symmetry coinciding with said move axis ($\Delta$) pierced along said axis to allow said threadlike object to move, disposed at one end of said hollow body (10) and fixed to the inner walls of this body (10), and comprising first and second conjugate foci (F1, F2) the second (F2) of which is situated on the move axis ($\Delta$), means for focussing the laser beam at the first focus (F1) of the ellipsoidal mirror (4), the parallel beam (2) from said laser having a direction ($\Delta'$) perpendicular to the axis of move ($\Delta$) of said threadlike object and included in a plane perpendicular to said slanting bearing surface (11), so that said beam, after having been focussed by said focussing means and after reflection on said slanting bearing surface (11) and on the walls of said ellipsoidal mirror, is focussed at the second focus (F2) of said mirror situated on the move axis of said threadlike object.

2. A device according to claim 1, characterized in that said focussing means comprise a spherical mirror (3), that the hollow body (10) and the cylindrically shaped object (15) comprise two cylindrical bores whose axes ($\Delta'$) coincide and are perpendicular to the move axis ($\Delta$) and included in a plane perpendicular to the slanting bearing surface (11) of said cylindrically shaped object, that the axis of symmetry of said mirror (3) coincides with the axis of symmetry ($\Delta'$) of said bores and that said mirror (3) is disposed on the opposite side of the tubular shaped body (10) with respect to the laser.

3. A device according to claim 1, characterized in that said focussing means comprise a parabolic mirror (3), that the hollow body (10) and the cylindrically shaped object (15) comprise two cylindrical bores whose axes ($\Delta'$) coincide and are perpendicular to said move axis ($\Delta$) and included in a plane perpendicular to the slanting bearing surface (11) of said cylindrically shaped object, and that the axis of symmetry of said mirror (3) coincides with the axis of symmetry ($\Delta'$) of said bores, and that that mirror (3) is disposed on the opposite side of the tubular shaped body with respect to the laser.

4. A device according to claim 1, characterized in that said focussing means comprise a lens (23) whose axis of symmetry is perpendicular to the move axis ($\Delta$) of said threadlike object and is included in a plane perpendicular to said slanting bearing surface (11), and in that said lens (23) is situated between the laser and the hollow body (10).

5. A device according to claim 1, characterized in that said hollow body (10) is a tubular body.

6. A device according to claim 1, characterized in that said move means comprise two elements (8, 9) disposed at the two ends of said tubular body (10) each having an orifice (7, 6) situated at the level of the axis of symmetry ($\Delta$) of this body (10) and allowing the threadlike object (1) to move.

7. A device according to claim 6, characterized in that said orifices (6, 7) have walls made from tetrafluorethylene.

8. A device according to claim 6, characterized in that said ellipsoidal mirror (4) rests on a spring (5) fixed to one of these elements (9).

9. A device according to claim 8, characterized in that said ellipsoidal mirror (4) is fixed to the inner walls of said tubular body by means of a crown (25) pierced with ventilation holes (13).

10. A device according to claim 9, characterized in that said tubular body comprises a ventilation orifice (12) situated between said crown (25) pierced with holes and the element (9) which supports the spring (5), said orifice receiving a neutral gas blown in from outside the hollow body (10).

11. The application of the device according to any one of claims 1 to 10 to the heating of an optical fiber.

## Patentansprüche

1. Vorrichtung zum Erhitzen eines ringförmigen Oberflächenbereichs eines fadenförmigen zylindrischen Gegenstands, mit einem einen parallelen Strahl liefernden Kohlendioxid-Laser und einem Hohlkörper (10), der eine Symmetrieachse ($\Delta$) hat und einen inneren Bereich aufweist, mit Mitteln zum Vorbeiziehen dieses fadenförmigen Gegenstands (1) entlang einer Ziehachse, die mit dieser Symmetrieachse ($\Delta$) zusammenfällt, mit einem zylindrischen Objekt (15), dessen Symmetrieachse mit dieser Ziehachse zusammenfällt, das eine Bohrung entlang dieser Achse zum Durchziehen des fadenförmigen Gegenstands, und eine geneigte Basis aufweist, die eine reflektierende Oberfläche für den Laserstrahl bildet, sowie an einem ersten Ende dieses Hohlkörpers (10) angeordnet und an den Innenwänden dieses Körpers befestigt ist, mit einem ellipsoidalen Spiegel (4), dessen Symmetrieachse mit der Ziehachse (Δ') zusammenfällt und der entlang dieser Achse durchbohrt ist, um das Durchziehen des fadenförmigen Gegenstands zu erlauben, und der an einem Ende dieses Hohlkörpers (10) angeordnet und an den Innenwänden dieses Körpers (10) befestigt ist und einen ersten und einen zweiten konjugierten Brennpunkt (F1, F2) besitzt, von denen der zweite (F2) sich auf der Ziehachse (Δ') befindet, mit Mitteln zum Fokussieren des Laserstrahls auf den ersten Brennpunkt (F1) des ellipsoidalen Spiegels (4), wobei der von diesem Laser ausgesandte parallele Strahl (2) eine Richtung (Δ') hat, die senkrecht zur Ziehachse (Δ) des fadenförmigen Gegenstands ist und in einer zur geneigten Basis (11) senkrechten Ebene liegt, so daß der Strahl nach der Fokussierung durch die Fokussiermittel und nach der Reflektion an der geneigten Basis (11) und an den Wändern des ellipsoidalen Spiegels auf den zweiten Brennpunkt (F2) dieses Spiegels fokussiert wird, der sich auf der Ziehachse dieses fadenförmigen Gegenstands befindet.

2. Vorrichtung nach Anspruch 1, dadurch gekennzeichnet, daß die Fokussiermittel einen sphärischen Spiegel (3) aufweisen, daß der Hohlkörper (10) und das zylindrische Objekt (15) zwei zylindrische Bohrungen aufweisen, deren Achsen (Δ') zusammenfallen und senkrecht zur Ziehachse (Δ) verlaufen und in einer zur geneigten Basis (11) des zylindrischen Objekts senkrechten Ebene liegen, und daß die Symmetrieachse dieses Spiegels (3) mit der Symmetrieachse (Δ') der Bohrungen zusammenfällt und der Spiegel auf der gegenüberliegenden Seite des rohrförmigen Körpers (10) in bezug auf den Laser angeordnet ist.

3. Vorrichtung nach Anspruch 1, dadurch gekennzeichnet, daß die Fokussiermittel einen Parabolspiegel (3) aufweisen, daß der Hohlkörper (10) und das zylindrische Objekt (15) zwei zylindrische Bohrungen aufweisen, deren Achsen (Δ') zusammenfallen und senkrecht zur Ziehachse (Δ) und in einer zur geneigten Basis (11) des zylindrischen Objekts (15) senkrechten Ebene liegen, und daß die Symmetrieachse des Spiegels (3) mit der Symmetrieachse (Δ') der Bohrungen zusammenfällt und daß dieser Spiegel auf der gegenüberliegenden Seite des rohrförmigen Körpers (10) in bezug auf den Laser angeordnet ist.

4. Vorrichtung nach Anspruch 1, dadurch gekennzeichnet, daß die Fokussiermittel eine Linse (23) aufweisen, deren Symmetrieachse senkrecht zur Ziehachse (Δ) des fadenförmigen Gegenstands und in einer zur geneigten Basis (11) senkrechten Ebene liegt, und daß die Linse (23) zwischen dem Laser und dem Hohlkörper (10) angeordnet ist.

5. Vorrichtung nach Anspruch 1, dadurch gekennzeichnet, daß der Hohlkörper (10) ein rohrförmiger Körper ist.

6. Vorrichtung nach Anspruch 1, dadurch gekennzeichnet, daß die Ziehmittel zwei Elemente (8, 9) aufweisen, die an den beiden Enden des rohrförmigen Körpers (10) angeordnet sind und je eine Öffnung (7, 6) aufweisen, die sich in Höhe der Symmetrieachse (Δ) dieses Körpers (10) befindet und die das Durchziehen des fadenförmigen Gegenstands (1) erlaubt.

7. Vorrichtung nach Anspruch 6, dadurch gekennzeichnet, daß diese Öffnungen (6, 7) Wände aus Tetrafluoräthylen haben.

8. Vorrichtung nach Anspruch 6, dadurch gekennzeichnet, daß der ellipsoidale Spiegel (4) auf einer auf einem dieser Elemente (9) befestigten Feder (5) ruht.

9. Vorrichtung nach Anspruch 8, dadurch gekennzeichnet, daß der ellipsoidale Spiegel (4) an den Innenwänden des rohrförmigen Körpers über eine mit Lüftungslöchern (13) versehene Krone (25) befestigt ist.

10. Vorrichtung nach Anspruch 9, dadurch gekennzeichnet, daß der rohrförmige Körper eine Lüftungsöffnung (12) aufweist, die zwischen dieser mit Löchern versehenen Krone (25) und dem die Feder (5) tragenden Element (9) angeordnet ist, wobei diese Öffnung ein eingeblasenes neutrales Gas empfängt, das von außerhalb des Hohlkörpers (10) kommt.

11. Anwendung der Vorrichtung nach einem beliebigen der Ansprüche 1 bis 10 auf das Erwärmen einer Lichtleitfaser.

0 112 224

FIG.1

FIG. 2

# FIG. 3

# FIG.4